# EUROPEAN PATENT APPLICATION

(11) **EP 1 132 411 A1**
(43) Date of publication of application: **12.09.2001**
(21) Application number: 00204099.6
(22) Date of filing: 20.11.2000
(51) Int. Cl.: C08F 8/30, C08K 5/34, C08G 63/91

(54) **Thermosetting composition**

(30) Priority: 10.03.2000 NL 1014603; 28.04.2000 EP 00201533; 31.05.2000 EP 00201941
(71) Applicant: DSM N.V., 6411 TE Heerlen (NL)
(72) Inventor: Loontjens, Jacobus Antonius, 6231 KK Meerssen (NL); van Benthem, Rudolfus Antonius Theodorus Maria, 6141 BR Limbricht (NL); Plum, Bartholomeus Johannes Margretha, 6235 AJ Ulestraten (NL); Rietberg, Johan, 8042 NR Zwolle (NL)
(74) Representative: Mooij, Johannes Jacobus

(57) **Abstract**

The invention is related to a thermosetting composition containing a functional resin with -OH or -NH₂ groups, a functionality of more than 2, and a crosslinking agent, wherein the crosslinking agent is a carbonylbislactamate. The composition preferably contains also an acid or a base as a catalyst. The invention further relates to the use of a carbonylbislactamate for curing of a functional resin with -OH or -NH₂ groups and a functionality of more than 2.

## Description

The invention relates to a thermosetting composition containing a functional resin with -OH or-NH₂ groups, with a functionality of more than 2 and a crosslinking agent. More specifically, the invention relates to a single-component (1K) resin, notably a 1K-resin for use in solvent-based coatings and in powder coatings.

Known 1K resins are systems that are based on a resin and a blocked isocyanate as crosslinking agent. Such systems are disclosed in for example the Review paper by D.A. Wicks et al in Progress in Organic Coatings 36 (1999) 148-172.

The crosslinking temperature varies between 100 and 200°C depending on the type of isocyanate and the group with which the isocyanate is blocked.

Blocked isocyanates commonly used as crosslinking agent are trimers of caprolactam-blocked hexamethylene diisocyanate (HMDI) or isophorone diisocyanate (IPDI). These compounds have molecular weights of 843 and 1005 g/mol, respectively, and a functionality of 3. The molecular weight-per-functionality of these compounds is 281 and 335, respectively. The molecular weight-per-functionality in these blocked isocyanates is relatively high.

Consequently, the drawback of compositions in which blocked isocyanates are present as a crosslinking agent is that these compositions contain relatively large amounts of crosslinker, which is the expensive part in the composition.

The object of the invention is to provide a composition that does not have this drawback.

This object is achieved by the crosslinking agent being carbonylbislactamate (CBL) with the general formula: 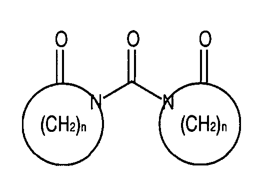 wherein n is an integer from 3 to 15. Preferably the carbonylbislactamate is carbonylbiscaprolactamate (CBC), with n = 5.

In CBC, a molecule represented by the following formula, 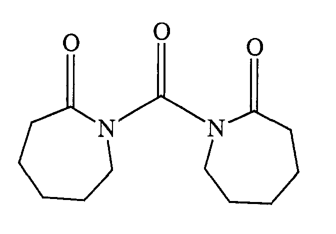 the molecular weight-to-functionality ratio is 126. As a result, compositions with CBC as a crosslinking agent contain relatively few crosslinker. If, for example, a resin contains 60 mmol of -OH groups for each 100 g of resin, 20 g of caprolactam-blocked trimer of IPDI but only 7.5 g of CBC are needed.

Crosslinkers are substantially more costly than resins and therefore heavily affect the cost price of the coating. Thus, an advantage of a coating based on CBL is that such a coating is substantially cheaper than a known coating based on a blocked isocyanate. In contrary to blocked isocyanates is the reaction of the reactive groups in CBL unequal. This offers the possibility to bound the crosslinker to the resin prior to the coating application. The CBL can also be just added to the resin.

The composition of the invention can also contain a catalyst. This ensures that not only amineterminated resins can be cured but also hydroxyterminated resins. Catalysts can be acids or bases. The catalyst can be added or bound to the resin.

Acids that are suitable as a catalyst for the crosslinking of resins in the presence of carbonylbislactamate are Sb₂O₃, As₂O₃, LiX, BX₃, MgX₂, AlX₃, BiX₃, SnX₄, SbX₅, FeX₃, GeX₄, GaX₃, HgX₂, ZnX₂, AlX₃, TiX₄, MnX₂, ZrX₄, R₄NX, R₄PX, or HX where X is H, I, Br, Cl, F, acetylacetonate (acac), OR, O(O)CR or combinations of these and R is alkyl or aryl. Brønstedt acids such as H₂SO₄, HNO₃, HX, H₃PO₄, H₃PO₃, RH₂PO₂, RH₂PO₃, R[(CO)OH]ₙ, where n = 1-3, RSO₃H with R is alkyl or aryl, are also suitable.

Bases that are suitable as a catalyst for the crosslinking of resins in the presence of carbonylbislactamate are M(OH)ₙ, (RO)ₙM (M= Alkali or earth alkali), NRₙH₄₋ₙOH (R = alkyl with 1 to 20 carbon atoms or aryl, and n = 1-4), tertiary amines including triethylamine, tributylamine, trihexylamine, trioctylamine, guanidine, cyclic amines such as diazobicyclo[2,2,2]octane (DABCO), dimethylaminopyridine (DMAP), and morfoline.

It is preferred for the catalyst to be one of the following compounds:
Ti(OR)₄, Zr(OR)₄, RSO₃H, LiX, LiH, NaH, Li-carboxylate MgX₂, ROM (M is Na, K, Li), Zn(acac)₂, DABCO, DMAP, with R is alkyl with 1 to 20 carbon atoms, or aryl and X is I, Br, Cl or F. This ensures that the time needed for curing is even shorter.

The functional resins may be aminofunctional or hydroxyfunctional polymers. The functionality of the resins is more than 2. Preferably the functionality is more than 2.5. Most preferably the functionality is more than 3.

It is preferred for the resins to be hydroxyfunctional polyethers, hydroxyfunctional polyesters, hydroxyfunctional polyacrylates or hydroxyfunctional polyolefins, or combinations of these.

Thermosetting polyester coatings predominantly contain curable polyester resins which are carboxyl- or hydroxyl-functional to ensure a crosslinking reaction. A wide range of polyesters allows a combination of useful properties such as tunable reactivity, color stability, appearance, corrosion resistance and weathering performance.

A suitable target range for the hydroxyl number of the polyester is between for example 20 and 200 mg KOH/g resin. A more preferable range is between 25 and 100 mg KOH/g resin. The most preferable range is between 30 and 80 mg KOH/g resin. A target range for the acid number may be lower than 25, and the glass transition temperature preferably ranges between 25 and 100 degrees celcius. The molar ratio of the hydroxyl functional groups of the polymer and the lactamate groups of the crosslinker may be between for example 3:1 and 1:3, preferably between 1.5 : 1 and 1: 1.5 and most preferably between 1.2:1 and 1:1.4.

Polyesters are generally based on aliphatic polyalcohols and polycarboxylic acids. The polycarboxylic acids preferably are aromatic carboxylic acids. Aromatic carboxylic acids can be isophtalic acid, terephthalic acid, 2,6-naphthalene dicarboxylic acid, 4,4-oxybisbenzoic acid, or combinations of these. Other suitable aromatic, cycloaliphatic and/or acyclic polycarboxylic acids useful herein include, for example, 3,6-dichloro phthalic acid, tetrachloro phthalic acid, tetrahydro phthalic acid, hexahydro terephthalic acid, hexachloro endomethylene tetrahydro phthalic acid, phthalic acid, azelaic acid, sebacic acid, decane dicarboxylic acid, adipic acid, succinic acid and maleic acid. These acids may be used as such, or, in so far as available at their anhydrides, acid chlorides or lower alkyl esters. Small amounts of trifunctional acids for example trimelittic acid may be applied to obtain a functionality of more than 2.

Hydroxy carboxylic acids and/or optionally lactones can also be used, such as, for example, 12-hydroxy stearic acid, hydroxy pivalic acid and E-caprolactone. Monocarboxylic acids, such as, for example, benzoic acid, tert.-butyl benzoic acid, hexahydro benzoic acid and saturated aliphatic monocarboxylic acids, may, if desired, be used in minor amounts.

Useful polyalcohols, in particular diols, reactable with the carboxylic acids to obtain the polyester include aliphatic diols such as, for example, ethylene glycol, propane-1,2-diol, propane-1,3-diol, butane-1,2-diol, butane-1,4-diol, butane-1,3-diol, 2,2-dimethylpropanediol-1,3 (= neopentyl glycol), hexane-2,5-diol, hexane-1,6-diol, 2,2-bis-(4hydroxy-cyclohexyl)-propane (hydrogenated bisphenol-A), 1,4-dimethylolcyclohexane, diethylene glycol, dipropylene glycol, 2,2-bis[4-(2-hydroxy ethoxy)-phenyl] propane, the hydroxy pivalic ester of neopentyl glycol, butyethylpropane diol and ethylmethylpropane diol.

Small amounts, such as less than for example about 20 wt.% and preferably less than 15 wt.%, of trifunctional alcohols may be used in order to obtain a functionality of more than 2. Examples of usefull polyols are glycerol, hexanetriol, trimethylol ethane, trimethylol propane and tris-(2-hydroxyethyl)-isocyanurate.

Tetrafunctional monomers generally are not preferred, because these may cause too much branching and gelling, although minute quantities can be used. Examples of useful polyfunctional alcohols and acids are sorbitol, pentaerithritol and pyromellitic acid. However, in order to synthesise branched polyesters, trifunctional monomers are preferred.

The thermosetting coating can be a powder coating. Powder coatings generally comprise a polyester, a crosslinker and a catalyst, the polyester being based on carboxylic acid and alcohol units, wherein between 10 and 100% of the carboxylic acid units are isophtalic or terephtalic acid units. More preferably between 15 and 100% and most preferably between 75 and 100% of the carboxylic acid units are isophatlic acid units. Between 75 and 100% isophtalic acid units are preferred to improve the outdoor durability of a coating.

If so desired, the usual additives can be added to the composition according to the invention, such as for example pigments, fillers, degassing agents, and stabilizers. Suitable pigments are for example inorganic pigments, such as for example titanium dioxide, zinc sulphide, iron oxide and chromium oxide, and also organic pigments such as for example azo compounds. Suitable fillers are for example metal oxides, silicates, carbonates and sulphates.

Primary and/or secondary antioxidants, UV stabilizers such as quinones, either or not sterically hindered phenolic compounds, phosphonites, phosphites, thioethers and HALS compounds (hindered amine light stabilizers) can for example be used as stabilizers.

Examples of degassing agents are benzoin and cyclohexane dimethanol bisbenzoate. The flow agents include for example polyalkylacrylates, fluorohydrocarbons and silicone fluids. Other suitable additives are for example additives for improving tribocharging, such as sterically hindered tertiary amines that are described in EP-B-371528.

The thermosetting composition is prepared and cured in a manner known to those skilled in the art for solvent-based coatings and for powder coatings.

Polyesters are prepared according to conventional procedures by esterification or transesterification, optionally in the presence of customary esterification catalysts such as, for instance, dibutyltin oxide or tetrabutyl titanate. Preparation conditions and the COOH/OH ratio can be selected so as to obtain end products that have an acid number and/or a hydroxyl number within the target ranges indicated before.

The invention also relates to a process for the curing of a functional resin with -OH or NH₂ groups and with a functionality of more than 2, in which the resin is cured in the presence of a carbonylbislactamate.

The invention also relates to the use of carbonylbislactamate in the curing of a functional resin with -OH or -NH₂ groups and with a functionality of more than 2.

The invention will be elucidated below on the basis of the following examples.

### Example I

A polyester resin comprising 100% isophtalic acid units (Uralac P1580™ of DSM Resins), CBC, flow benzoin were mixed in an extruder at 100°C. The extrudate was cooled, ground and sieved, and the sieve fraction smaller than 90 micrometers was used as powder coating. The powder coating was sprayed electrostatically onto aluminium panels. The panels sprayed with powder coating were cured in a furnace at 200°C for 30 minutes. The aceton-resistance of this coating turned out to be 30. The mass ratio's of the components are given in table 1.

### Example II

### Preparation of a powder paint binder composition and powder coating

A polyester resin comprising 100% isophtalic acid units (Uralac P1580™ of DSM Resins), CBC, tetrabutyl titanate, flow benzoin were mixed in an extruder at 100°C. The extrudate was cooled, ground and sieved, and the sieve fraction smaller than 90 micrometers was used as powder coating. The powder coating was sprayed electrostatically onto aluminium panels. The panels sprayed with powder coating were cured in a furnace at 200°C for 30 minutes. The mass ratio's of the components are given in table 1.

### Comparative Example A

Example 1 was repeated with the exeption that the crosslinker was replaced by Vestagon B1530™ being trimerized isophoron diisocyanate blocked with caprolactam.

**Table 1**

| | **I (pph)** | **II (pph)** | **A (pph)** |
|---|---|---|---|
| **Uralac P1580** | 200 | 200 | 200 |
| **Vestagon B1530** | | | 50 |
| **CBC** | 36 | 36 | |
| **Kronos 2160** | 100 | 100 | 100 |
| **Resiflow PV5** | 3.0 | 3.0 | 3 |
| **Benzoin** | 0.8 | 0.8 | 1.5 |
| **Tetrabutyl titanate** | - | 2.0 | |

| Test results: | | |
|---|---|---|
| **Appearance, 50 µm** | **Moderate** | **Moderate** |
| Acetone-resistance ¹⁾ | >100 | >100 |
| Quv-B 2) 50% retention at 60° gloss (hours) | 800 | 800 |

| | | |
|---|---|---|
| ¹⁾ Acetone resistance determined with acetone double rubs test | | |
| ²⁾ Weather resistance test according to ASTM G 53-88. | | |

These experiments show that the composition according to the invention requires less crosslinker agent than the trimerized diisocyanate blocked composition.

## Claims

1. Thermosetting composition containing a functional resin with -OH or -NH₂ groups, with a functionality of more than 2, and a crosslinking agent, **characterized in that** the crosslinking agent is a carbonylbislactamate, with the general formula: 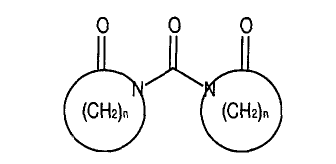 wherein n is an integer from 3 to 15.

2. Thermosetting composition according to Claim 1, wherein the composition also contain an acid or a base.

3. Thermosetting composition according to Claim 1, or Claim 2 in which the crosslinking agent is carbonylbiscaprolactamate.

4. Process for the curing of a functional resin with -OH or -NH₂ groups, and with a functionality of more than 2 **characterized in that** the resin is cured in the presence of a carbonylbislactamate.
